(19) Europäisches Patentamt
European Patent Office
Office européen des brevets

(11) **EP 3 716 578 B1**

(12) **EUROPÄISCHE PATENTSCHRIFT**

(45) Veröffentlichungstag und Bekanntmachung des Hinweises auf die Patenterteilung:
**06.09.2023 Patentblatt 2023/36**

(21) Anmeldenummer: **19166071.1**

(22) Anmeldetag: **29.03.2019**

(51) Internationale Patentklassifikation (IPC):
*H04L 67/30* (2022.01)   *H04L 67/125* (2022.01)
*H04L 67/51* (2022.01)   *H04L 67/63* (2022.01)

(52) Gemeinsame Patentklassifikation (CPC):
**H04L 67/125; H04L 67/30; H04L 67/51;** H04L 67/63

(54) **VERFAHREN UND EINE VORRICHTUNG ZUM ANSTEUERN EINES TECHNISCHEN GERÄTS MIT EINEM OPTIMALEN MODELL**

METHOD AND DEVICE FOR CONTROLLING A TECHNICAL DEVICE WITH OPTIMAL MODEL

PROCÉDÉ ET DISPOSITIF DE COMMANDE D'UN APPAREIL TECHNIQUE À L'AIDE D'UN MODÈLE OPTIMAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**30.09.2020 Patentblatt 2020/40**

(73) Patentinhaber: **Siemens Aktiengesellschaft 80333 München (DE)**

(72) Erfinder:
• **Elsner, Christoph**
**91052 Erlangen (DE)**
• **Meixner, Sebastian**
**1220 Wien (AT)**
• **Schall, Daniel**
**1220 Wien (AT)**

(74) Vertreter: **Siemens Patent Attorneys Postfach 22 16 34 80506 München (DE)**

(56) Entgegenhaltungen:
**WO-A1-2015/081063    US-A1- 2018 316 555**

• **BJELICA MILAN Z ET AL: "Adaptive device cloud for Internet of Things applications", 2014 IEEE INTERNATIONAL CONFERENCE ON CONSUMER ELECTRONICS - CHINA, IEEE, 9. April 2014 (2014-04-09), Seiten 1-3, XP032731806, DOI: 10.1109/ICCE-CHINA.2014.7029850 [gefunden am 2015-02-03]**
• **BENAVIDES D ET AL: "Automated analysis of feature models 20 years later: A literature review", INFORMATION SYSTEMS, PERGAMON PRESS, OXFORD, GB, Bd. 35, Nr. 6, 1. September 2010 (2010-09-01), Seiten 615-636, XP027037362, ISSN: 0306-4379 [gefunden am 2010-03-04]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren und eine Vorrichtung zum Ansteuern eines technischen Geräts mit einem optimalen Modell.

Softwarearchitektur in industriellen Systemen durchläuft derzeit einen großen Wandel. Im Rahmen der Überwachung industrieller Prozesse wurden Softwareplattformen typischerweise lokal beim Kunden installiert. Die Kunden mussten im Allgemeinen den gesamten Hard- und Software-Stack aufrechterhalten. Dies ist derzeit noch der übliche Ansatz bei der Gestaltung solcher Überwachungssysteme. Die Entwicklungen bei Industrial IoT (Internet of Things) und Edge Computing werden dieses Modell jedoch stören. Kunden werden Cloud- und Edge-Computing-Funktionen nutzen, um ihre industriellen Prozesse zu überwachen, zu steuern und zu optimieren.

Dieser neue Rechenstack (einschließlich Datenformaten, Protokollen und Anwendungen), der vom Rand bis zur Cloud reicht und Integrationspunkte zu Altsystemen und "Brownfield"-Umgebungen umfasst, stellt erhebliche architektonische Herausforderungen. Architekten müssen über ein breites Wissen sowohl über die wachsende Funktionalität von Cloud- und Edge-Plattformen als auch über die bei den Kunden vorhandenen Technologien verfügen.

Architekten waren schon immer mit Designentscheidungen in komplexen Industriesystemen konfrontiert. Was sich jetzt abzeichnet, ist ein höherer Integrationsgrad von Betriebstechnologien - der klassischen Automatisierungsdomäne - und der Unternehmens-IT-Schicht. Die durchgängige Integration von Lösungen, die diese Schichten umfassen und die nicht funktionalen Anforderungen des Gesamtsystems erfüllen, macht das Systemdesign zu einer anspruchsvollen Aufgabe.

Daher besteht der Wunsch, vorhandene Erfahrung von Systemarchitekten, die sich bereits mit ähnlichen Problemen befasst haben, besser zu nutzen.

Dies kann zum Einen bedeuten, den Überblick über die relevanten Dienste zu behalten, die von verschiedenen Cloud- und Edge-Plattformen bereitgestellt werden, und die Suche nach einem geeigneten Dienst für die jeweilige Aufgabe zu erleichtern.

Ferner kann das bedeuten, dass bestehendes Wissen bei der Integration von technischen Geräten, wie IoT-Geräten oder IoT-Anlagen genutzt wird, um die Komplexität der Integration zu reduzieren, die Entwicklungszeit zu verkürzen und Kosten zu sparen.

WO 2015/081063 A1 offenbart ein Verfahren zur Entdeckung von passenden Cloud-Diensten für IoT-Geräte, beispielsweise eines Diagnosedienstes für eine Waschmaschine, wobei eine Geräteklasse zur Ermittlung geeigneter Dienste genutzt wird. US 2018/316555 A1 offenbart ein Verfahren zur automatischen Klassifizierung von Geräten.

Daher ist es Aufgabe der Erfindung die Ansteuerung von technischen Geräten zu erleichtern beziehungsweise die Integration von technischen Geräten in komplexe Systeme zu beschleunigen.

Die erfindungsgemäße Aufgabe wird durch ein Verfahren zum Ansteuern eines technischen Geräts mit einem optimalen Modell gelöst, wobei folgende Schritte ausgeführt werden:

   a) Konfigurieren zumindest eines Geräte-Merkmals des technischen Geräts in Form eines Geräte-Modells durch einen ersten Edge-Dienst,
   b) Erzeugen zumindest eines abstrahierten Merkmals in Form eines abstrakten Modells durch einen zweiten Edge-Dienst,
   c) Erzeugen und Konfigurieren einer ersten Beziehung zwischen dem ersten Edge-Dienst und dem zweiten Edge-Dienst, wobei die erste Beziehung mittels einer automatischen Klassifizierung des zumindest einen Geräte-Merkmals unter Verwendung des zumindest einen abstrahierten Merkmals ermittelt wird,
   d) Bereitstellen zumindest eines jeweiligen Anwendungs-Merkmals in Form eines Anwendungs-Modells von zumindest einem IoT-Dienstanbieter durch den zweiten Edge-Dienst unter Verwendung eines Auswahl-Parameters auf Basis des abstrakten Modells,
   e) Vergleichen des abstrahierten Modells mit dem Anwendungs-Modell und Auswählen des Modells mit der größten Übereinstimmung als das optimale Modell,
   f) Ansteuern des technischen Geräts mit dem optimalen Modell.

Dadurch wird erreicht, dass die Modellierung einer Anwendung, einer generischen Digitalisierungsplattform sowie ihrer konkreten Instanziierung auf derselben Abstraktionsebene durch die Verwendung automatischer Klassifizierung von Merkmalen von Merkmal-Modellen erleichtert wird und gespeicherte Modelle berücksichtigt werden, welche Erfahrungsmuster beinhalten können.

Ein Vorteil bei der Definition der Merkmal-Modelle für abstrakte und konkrete Plattformen besteht darin, dass implizites Architekturwissen explizit gemacht wird, welches dadurch einfacher übertragen und bei neuen Lösungen angewandt werden kann.

Durch das erfindungsgemäße, auf Funktionen basierende Verfahren wird auch erreicht, dass ein Modell geschaffen wird, welches die Funktionalität einer Digitalisierungsplattform, einschließlich ihrer Qualitätsattribute, aufweist und ein Gerät entsprechend vorteilhaft angesteuert wird.

In einer Weiterbildung der Erfindung ist es vorgesehen, dass die Konfiguration des zumindest einen Geräte-Merkmals durch Bestimmung zumindest eines Geräte-Parameters zur Ansteuerung des technischen Geräts festgelegt ist. Dadurch wird erreicht, dass sowohl Geräte-Parameter, als auch Parameter beim Betrieb des Geräts berücksichtigt werden können.

In einer Weiterbildung der Erfindung ist es vorgesehen, dass der zweite Edge-Dienst die Abstrahierung des Geräte-Modells mittels eines Verfahrens zur automatischen Klassifizierung von Merkmalen, welches insbesondere auf dem Prinzip der künstlichen Intelligenz oder des maschinellen Lernens beruht, durchführt. Dadurch wird erreicht, dass das Verfahren noch effizienter wird.

In einer Weiterbildung der Erfindung ist es vorgesehen, dass der Anwendungs-Parameter eine Kenngröße hinsichtlich der Gesamtmerkmalserfüllung *FF* umfasst, welche durch den Zusammenhang:

$$FF = \frac{f_{mapped}}{f_{total}}$$

beschrieben werden kann, wobei $f_{mapped}$ die Anzahl der Anwendungsfunktionen, für die eine Übereinstimmung wurde gefunden und $f_{total}$ die Gesamtzahl der Anwendungsfunktionen ist. Dadurch wird erreicht, dass auf eine einfache Weise die Qualität eines einzelnen Abgleichs bestimmt werden kann.

In einer Weiterbildung der Erfindung ist es vorgesehen, dass der Anwendungs-Parameter eine Kenngröße hinsichtlich der Einheitlichkeit *U* umfasst, welche durch den Zusammenhang:

$$U = \frac{f_{used}}{f_{mapped}}$$

beschrieben werden kann, wobei U die Anzahl konkreter Cloud-Merkmale ist, denen das zumindest eine Anwendungs-Merkmal zugeordnet ist.

Dadurch wird erreicht, dass auf eine einfache Weise die Qualität eines einzelnen Abgleichs bestimmt werden kann.

Erfindungsgemäß ist es vorgesehen, dass der Anwendungs-Parameter eine Kenngröße hinsichtlich der Qualitäts-Adhärenz *QAD* umfasst, welche durch den Zusammenhang:

$$QAD = 0.5 \cdot \frac{1}{f_{total}} \cdot \sum_{f \in F} 1 - \frac{\sum_{q \in Q_f} \left( r_{q,f} - p_{q,m_f} \right)}{|Q_f|}$$

beschrieben wird, wobei

| | |
|---|---|
| *F* | die Menge aller abgebildeten Merkmale, |
| $Q_f$ | die Menge der Qualitätsmerkmale, die für ein Merkmal *f* definiert ist, |
| $r_{q,f}$ | der erforderliche, normalisierte Wert des Merkmals *f* für ein Qualitätsattribut *q,* |
| $p_{q,m_f}$ | der normalisierte Wert des Qualitätsattributs *q,* welches $m_f$ bereitstellt, ist. |

Dadurch wird erreicht, dass die Qualität eines einzelnen Abgleichs noch besser bestimmt werden kann.

Die verschiedenen Ausführungen für die Kenngröße des Anwendungs-Parameters können untereinander auch kombiniert werden. Außerdem können mehrere Kenngrößen vom Anwendungs-Parameter umfasst sein, welche gleich oder unterschiedlich definiert sind.

Ferner wird durch die vorstehend genannten Verfahren zur Bestimmung der Abgleichs-Qualität eine Löser- und Optimierungstechnik automatisch die am besten passende Digitalisierungsplattform ermittelt.

Das Verfahren zur Parametrierung einer Softwarearchitektur wird allgemein bei der Gestaltung komplexer Systeme durch die Bereitstellung eines abstrakten Merkmal-Modells realisiert, mit welchem ein Anwendungs-Merkmal-Modell verknüpft werden kann. Dadurch werden unterschiedliche Lösungen ermittelt, welche basierend auf der Erfüllung der erforderlichen Funktionen sowie der nicht funktionalen Anforderungen ausgewählt werden.

Die erfindungsgemäße Aufgabe wird auch durch eine Vorrichtung zum Ansteuern eines technischen Geräts mit einem optimalen Modell gelöst, wobei die Vorrichtung dazu eingerichtet ist, die Schritte des erfindungsgemäßen Verfahrens auszuführen.

Die Erfindung wird nachfolgend anhand eines in den beigeschlossenen Zeichnungen dargestellten Ausführungsbeispiels näher erläutert. Die Figuren zeigen in:

Fig. 1    eine schematische Darstellung eines Ausführungsbeispiels des erfindungsgemäßen Verfahrens,

Fig. 2    ein Ausführungsbeispiel der Erfindung für verschiedene Typen von Merkmal-Modellen und ihre Beziehungen.

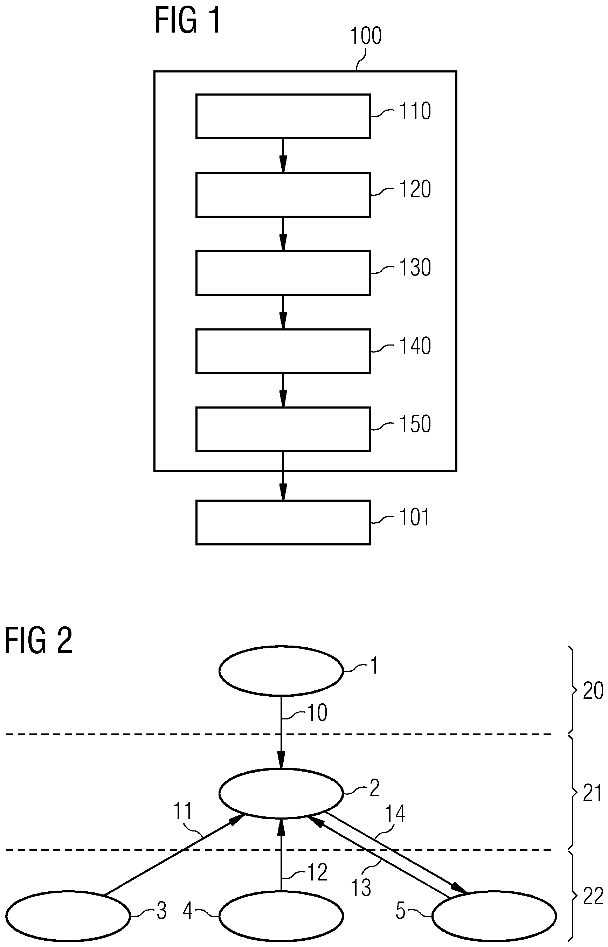

**Fig. 1** zeigt schematisch ein Ausführungsbeispiel für eine Vorrichtung 100, welche dazu eingerichtet ist, das erfindungsgemäße Verfahren auszuführen und ein Gerät 150 mit einem optimalen Modell anzusteuern:

a) Konfigurieren 100 eines Geräte-Merkmals des technischen Geräts,

b) Erzeugen 110 eines abstrahierten Merkmals,

c) Erzeugen 120 und Konfigurieren einer ersten Beziehung zwischen dem ersten Edge-Dienst und dem zweiten Edge-Dienst, welche mittels einer automatischen Klassifizierung von Merkmalen ermittelt wird,

d) Bereitstellen 130 eines jeweiligen Anwendungs-Merkmals in Form eines Anwendungs-Modells von zumindest einem IoT-Dienstanbieter unter Verwendung eines Auswahl-Parameters auf Basis des abstrakten Modells,

e) Vergleichen 140 des abstrahierten Modells mit dem Anwendungs-Modell und Auswählen des Modells mit der größten Übereinstimmung als das optimale Modell,

f) Ansteuern des technischen Geräts 150 mit dem optimalen Modell.

**Fig. 2** zeigt ein Ausführungsbeispiel der Erfindung für verschiedene Typen von Merkmal-Modellen und ihre Beziehungen.

Im Verfahrens-Schritt a) erfolgt das Konfigurieren 100 eines Geräte-Merkmals 20 des technischen Geräts in Form eines Geräte-Modells durch einen ersten Edge-Dienst 1.

Der erste Edge-Dienst 1 ist dazu eingerichtet, ein tatsächliches Merkmal 20 des technischen Geräts 150 in Form eines Modells abzubilden.

Im Verfahrens-Schritt b) erfolgt das Erzeugen 110 eines abstrahierten Merkmals 21 in Form eines abstrakten Modells durch einen zweiten Edge-Dienst 2.

Der zweite Edge-Dienst 2 ist mit dem ersten Edge-Dienst 1 verbunden und ist dazu eingerichtet, ein abstrahiertes Merkmal 21 zu verarbeiten.

Im Verfahrens-Schritt c) erfolgt das Erzeugen 120 und Konfigurieren einer ersten Beziehung 10 zwischen dem ersten Edge-Dienst 1 und dem zweiten Edge-Dienst 2, welche mittels einer automatischen Klassifizierung von Merkmalen unter Verwendung des zumindest einen abstrahierten Merkmals 21 ermittelt wird.

Dabei ist die Verbindung zwischen dem ersten Edge-Dienst 1 und dem zweiten Edge-Dienst 2 eine "CanBe-Realized"-Beziehung als die erste Beziehung 10.

Das abstrahierte Merkmal 21 kann mit Merkmalen von IoT-Dienstanbietern, wie beispielsweise Amazon Web Services (AWS) 3, Microsoft Azure IoT 4 oder Siemens Industrial Edge 5, vom zweiten Edge-Dienst 2 verglichen werden.

Ein IoT-Dienstanbieter 3-5 ist Software, mit der sich Cloud-Fähigkeiten auf lokale Geräte übertragen lassen. So können Geräte Daten näher an der Informationsquelle sammeln und analysieren, autonom auf lokale Ereignisse reagieren und sicher miteinander in lokalen Netzwerken kommunizieren.

Die IoT-Dienstanbieter 3-5 sind jeweils dazu eingerichtet, ein Anwendungs-Merkmal 22 zu verarbeiten.

Im Verfahrens-Schritt d) erfolgt das Bereitstellen 130 eines jeweiligen Anwendungs-Merkmals 22 in Form eines Anwendungs-Modells von zumindest einem IoT-Dienstanbieter 3-5 durch den zweiten Edge-Dienst 2 unter Verwendung eines Auswahl-Parameters 14 auf Basis des abstrakten Modells.

Dabei ist die Verbindung zwischen dem zweiten Edge-Dienst 2 und den IoT-Dienstanbietern 3-5 jeweils eine "Realized"-Beziehung 11-13, welche gemeinsam auch durch das Bereitstellen 130 bezeichnet werden können.

Zusätzlich weist jedoch der IoT-Dienstanbieter Siemens Industrial Edge 5 zusätzlich eine "Selected Implementation"-Beziehung auf, in welcher der Anwendungs-Parameter 14 übermittelt wird.

Im Verfahrens-Schritt e) erfolgt das Vergleichen 140 des abstrahierten Modells mit dem Anwendungs-Modell und Auswählen des Modells mit der größten Übereinstimmung als das optimale Modell.

Im Verfahrens-Schritt f) erfolgt das Ansteuern 150 des technischen Geräts 101 mit dem optimalen Modell.

Die Konfiguration des Geräte-Merkmals 20 kann durch Bestimmung zumindest eines Geräte-Parameters zur Ansteuerung des technischen Geräts 101 festgelegt werden.

Der zweite Edge-Dienst 2 kann die Abstrahierung des Geräte-Modells mittels eines Verfahrens zur automatischen Klassifizierung von Merkmalen, welches auf dem Prinzip der künstlichen Intelligenz oder des maschinellen Lernens beruht, durchführen.

Verschiedene Arten von Merkmals-Modellen können miteinander in Beziehung gesetzt werden. Merkmalsmodelle werden normalerweise verwendet, um die Variabilität von Software- und Softwareproduktfamilien zu beschreiben. Wenn jedoch in Betracht gezogen wird, dass die Verwendung bestimmter Funktionen Auswirkungen auf andere Funktionen haben kann, wird deutlich, dass die Auswahl von Cloud-Angeboten zur Realisierung einer Anwendung der Konfiguration eines Softwareprodukts ähnelt. Die Beziehungen zwischen einzelnen Merkmalen, die bestimmte Einschränkungen einführen, können zwei Formen annehmen:

- Cloud-Merkmale können selbst definiert werden: beispielsweise, wenn ein Merkmal A verwendet wird, sollte ein Merkmal B aufgrund von Einschränkungen der Cloud-Plattformen verwendet werden.
- Das abstrakte Merkmal-Modell kann bestimmte Beziehungen zwischen Merkmalen definieren, die eine neue Einschränkung bewirken.

Ein Beispiel für eine solche Einschränkung ist ein Merkmal, welches mithilfe eines Merkmals "HTTP-Server" Daten erzeugt, und in weiterer Folge ein weiteres Merkmal "HTTP-Client" benötigt, welches die Daten verbraucht.

Ein weiteres Beispiel für eine solche Einschränkung ist eine Cloud-Plattform, welche möglicherweise mehrere Algorithmen für maschinelles Lernen anbietet, jedoch das abstrakte Merkmal-Modell einen bestimmten zu verwendenden Algorithmus beschreibt.

Neben der Modellierung der Struktur von Cloud-Merkmalen und der Definition eines gemeinsamen Vokabulars kann mit dem abstrakten Merkmal-Modell auch definiert werden, welche Qualitätsmerkmale von einzelnen Merkmalen beeinflusst werden.

Darüber hinaus kann definiert werden, welche Merkmale von einem bestimmten Merkmal benötigt werden oder welche Cloud-Angebote in Kombination verwendet werden sollen, wodurch implizites Wissen codiert und explizit gemacht wird.

Konkrete Merkmalsmodelle können unabhängig von den abstrakten erstellt werden. Dies ist aufgrund einer möglichen Nichtübereinstimmung der Struktur und des Funktionsumfangs der Cloud-Plattformen im Gegensatz zum abstrakten Merkmal-Modell erforderlich.

Es besteht jedoch die Notwendigkeit, beide Modelle miteinander zu verbinden, was durch die Einführung von "Realizes"-Beziehungen zwischen den abstrakten und den konkreten Merkmalen erreicht wird.

Das konkrete Merkmalsmodell legt nicht nur fest, welche konkreten Merkmale welche abstrakten Merkmale erkennen, sondern auch, inwieweit welche Qualitätsmerkmale durch das konkrete Merkmal beeinflusst werden.

Nachdem die System-Merkmale mit dem Anwendungsfunktionsmodell modelliert wurden, erfolgt eine Bestimmung, welche abstrakten Funktionen eine individuelle Anwendungsfunktion realisieren können. Dies kann durch die Einführung von "CanBeRealizedBy"-Beziehungen zwischen den verschiedenen Funktionen in den verschiedenen Modellen erfolgen.

Ein niedriger Wichtigkeitswert gibt an, dass es nicht wichtig ist, ob das Qualitätsattribut durch das Merkmal negativ beeinflusst wird, während ein hoher Wert bedeutet, dass das Qualitätsattribut positiv beeinflusst werden sollte. Die Qualitätsattribute werden aus den abstrakten Merkmalen abgeleitet, mit denen die einzelnen Merkmale der Anwendung über eine "CanBeRealizedBy"-Beziehung verbunden sind. Es kann festgelegt werden, welche Cloud-Plattformen beim Matching-Prozess berücksichtigt werden sollen und ob Lösungen mit mehreren Plattformen in Betracht kommen oder nicht.

Sobald die Konfiguration der Merkmal-Modelle und ihrer Beziehungen abgeschlossen ist, können Web-Services aufgerufen werden, die den Abgleich tatsächlich berechnen (Merkmal-Matcher). Dieser Service verwendet einen CSOP-Löser ("Constraint Satisfaction and Optimization Problem"), um eine optimierte Übereinstimmung von Anwendungs-Merkmalen mit konkreten Plattform-Merkmalen zu ermitteln. Dieser Abgleich soll verschiedene Arten von Einschränkungen berücksichtigen, um eine gültige Ausgabe zu erzeugen.

Um die vorhandene Forschung im Bereich der Bestimmung der gültigen und optimierten Merkmal-Konfiguration zu nutzen, wird ein einzelnes Merkmal-Modell erstellt, das eine zusammengeführte Version der Merkmal-Modelle der Anwendung, des Abstracts und der Cloud-Plattformen ist. Sobald dieses zusammengeführte Modell erhalten wurde, wird ein Verfahren angewendet, welches den im Artikel von David Benavides, Sergio Segura, Antonio Ruiz-Cortes aus 2010, "Automated analysis of feature models 20 years later: A literature review. Information Systems" 35, 6 (2010), Seiten 615-636 beschriebenen Ansätzen ähnelt, um eine gültige, optimierte Konfiguration zu finden.

Um die Qualität eines einzelnen Abgleichs zu bestimmen, können verschiedene Metriken verwendet werden.

Ein Beispiel ist die Gesamtmerkmals-Erfüllung *FF* (englisch "overall feature fulfillment"), welche den Grad, zu dem die Systemmerkmale von der aktuellen Abbildung erfüllt werden, berechnet.

Daher kann der Anwendungs-Parameter 14 eine Kenngröße hinsichtlich der Gesamtmerkmalserfüllung *FF*

umfassen, was wie folgt ausgedrückt werden kann:

$$FF = \frac{f_{mapped}}{f_{total}}$$

$f_{mapped}$ ist dabei die Anzahl der Anwendungsfunktionen, für die eine Übereinstimmung wurde gefunden und $f_{total}$ die Gesamtzahl der Anwendungsfunktionen ist.

Ein weiteres Qualitätsmaß ist der Grad der Einheitlichkeit von Merkmalen, da es wünschenswerter ist, einen Dienst in einer bestimmten Architektur wiederzuverwenden, anstatt einen neuen einzuführen, der eine ähnliche Funktionalität aufweist. Daher kann der Anwendungs-Parameter 14 eine Kenngröße hinsichtlich der Einheitlichkeit $U$ umfassen, und somit eine Einheitlichkeit $U$ (englisch "uniformity") eines Abgleichs definiert werden kann als:

$$U = \frac{f_{used}}{f_{mapped}}$$

$U$ ist dabei die Anzahl konkreter Cloud-Merkmale, denen mindestens ein Anwendungs-Merkmal zugeordnet ist.

Der dritte Qualitätsindikator ist eine Qualitäts-Adhärenz $QAD$, welche beschreibt, wie gut die Gesamtlösung den Einschränkungen der Qualitätsattribute entspricht, da dies ein wichtiger Faktor bei der Auswahl der Architektur einer Lösung ist.

Daher umfasst der Anwendungs-Parameter 14 eine Kenngröße hinsichtlich der Qualitäts-Adhärenz $QAD$, welche definiert wird durch den Zusammenhang:

$$QAD = 0.5 \cdot \frac{1}{f_{total}} \cdot \sum_{f \in F} 1 - \frac{\sum_{q \in Q_f} \left( r_{q,f} - p_{q,m_f} \right)}{|Q_f|}$$

$F$ ist die Menge aller abgebildeten Merkmale.

$Q_f$ ist die Menge der Qualitätsmerkmale, die für das Merkmal $f$ definiert ist.

$r_{q,f}$ ist der erforderliche, normalisierte Wert des Merkmals $f$ für das Qualitätsattribut $q$.

$p_{q,m_f}$ ist der normalisierte Wert des Qualitätsattributs $q$, das $m_f$ (d.h. das konkrete Cloud-Merkmal, mit dem $f$ abgeglichen wird) bereitstellt.

Eine Multiplikation mit 0,5 sorgt für einen normalisierten Wert.

Der CSOP-Löser wird einmal für jede Plattform und einmal für eine Lösung mit mehreren Plattformen aufgerufen. Basierend auf diesen drei Qualitätsmaßstäben bestimmt der CSOP-Löser die optimale Lösung für jeden Aufruf, wobei alle zur weiteren Verarbeitung wieder zurückgegeben werden.

Die beste Lösung gemäß der vorher definierten Metrik wird für jede Cloud-Plattform sowie eine Multi-Plattform-Lösung präsentiert und bei der Bestimmung des optimalen Modells zur Ansteuerung des technischen Geräts 150 entsprechend herangezogen.

Als weiteres Ausführungsbeispiel der Erfindung kann die Erstellung eines manipulationssicheren Produktionsdatensatzes für einen Markt für gemeinsame Maschinen dienen, mit welchem die Maschinen oder Geräte angesteuert werden.

Es können Maschinenbesitzer ihre Maschinen für Kunden verfügbar machen, wenn sie normalerweise im Leerlauf wären, beispielsweise in einem Zwei-Schicht-Betrieb. Kunden können angeben, wie sie ihr Produkt herstellen möchten, beispielsweise durch Bereitstellung von CAD-Dateien des Produkts.

Darüber hinaus können sie bestimmte Parameter für den Fertigungsprozess angeben, wie zum Beispiel die maximalen Umdrehungen pro Minute eines Bohrers, der das Produkt bearbeitet. Da die Kunden den Maschinenbesitzern möglicherweise nicht vollständig vertrauen, dass sie das Produkt innerhalb der vereinbarten Parameter herstellen, möchten sie eine manipulationssichere Aufzeichnung des Produktionsprozesses haben. Diese Aufzeichnung kann beispielsweise verwendet werden, wenn Qualitätsprobleme auftreten, um den Produktionsschritt zu ermitteln, der möglicherweise nicht ordnungsgemäß ausgeführt wurde.

Um die Daten zu sammeln und so zu speichern, dass sie von keiner der beteiligten Parteien manipuliert werden können, ist eine Kombination aus Cloud- und Edge-Computing erforderlich. In der Werkstatt, in der sich die Maschinen befinden, die die Kundenanforderungen für die Herstellung bestimmter Produkte abwickeln, befindet sich eine Randplattform. Diese Edge-Plattform kann Daten über verschiedene Protokolle sammeln (z. B. "Open Platform Communications - Unified Architecture", kurz OPC-UA), sie aggregieren und in die Cloud übertragen. Für den vorgestellten Anwendungsfall gehen wir davon aus, dass die Edge-Plattform von einer vertrauenswürdigen Partei bereitgestellt wird und nicht manipuliert werden kann. Dadurch wird die Datenintegrität auf Kantenebene sichergestellt.

Sobald die Daten gesammelt und aggregiert sind, können sie auf eine Weise gespeichert werden, die allen Beteiligten den Zugriff ermöglicht, sie jedoch zu einem späteren Zeitpunkt unentdeckt manipuliert. Dies kann durch eine Konsortium-Blockchain erfolgen. Für eine Blockchain-Implementierung kann das bedeuten, dass keine Zulassung erforderlich ist, ein autoritätsbasierter Konsensalgorithmus eingesetzt wird und schnelle Transaktionen ohne Kosten möglich sind.

**Bezugszeichenliste:**

| | |
|---|---|
| 1, 2 | Edge-Dienst |
| 3 | IoT-Dienstanbieter, z.B. Amazon Web Services (AWS) |
| 4 | IoT-Dienstanbieter, z.B. Microsoft Azure IoT |
| 5 | IoT-Dienstanbieter, z.B. Siemens Industrial Edge |
| 10 | "CanBeRealized"-Beziehung |
| 11-13 | "Realized"-Beziehung |
| 14 | "Selected Implementation"-Beziehung |
| 20 | tatsächliches Merkmal |
| 21 | abstraktes Merkmal |
| 22 | Anwendungs-Merkmal |

**Patentansprüche**

1. Computer-implementiertes Verfahren zum Ansteuern eines technischen Geräts (101) mit einem optimalen Modell, wobei folgende Schritte ausgeführt werden:

a) Konfigurieren (100) zumindest eines Geräte-Merkmals (20) des technischen Geräts in Form eines Geräte-Modells durch einen ersten Edge-Dienst (1),

b) Erzeugen (110) zumindest eines abstrahierten Merkmals (21) in Form eines abstrakten Modells durch einen zweiten Edge-Dienst (2),

c) Erzeugen (120) und Konfigurieren einer ersten Beziehung (10) zwischen dem ersten Edge-Dienst (1) und dem zweiten Edge-Dienst (2), welche mittels einer automatischen Klassifizierung des zumindest einen Geräte-Merkmals (20) unter Verwendung des zumindest einen abstrahierten Merkmals (21) ermittelt wird,

d) Bereitstellen (130, 11-13) zumindest eines jeweiligen Anwendungs-Merkmals (22) in Form eines Anwendungs-Modells von zumindest einem IoT-Dienstanbieter (3-5) durch den zweiten Edge-Dienst (2) unter Verwendung eines Auswahl-Parameters (14) auf Basis des abstrakten Modells,

e) Vergleichen (140) des abstrahierten Modells mit dem Anwendungs-Modell und Auswählen des Modells mit der größten Übereinstimmung als das optimale Modell,

f) Ansteuern (150) des technischen Geräts (101) mit dem optimalen Modell,

wobei der Auswahl-Parameter (14) eine Kenngröße hinsichtlich der Qualitäts-Adhärenz **QAD** umfasst, welche durch den Zusammenhang:

$$QAD = 0.5 \cdot \frac{1}{f_{total}} \cdot \sum_{f \in F} 1 - \frac{\sum_{q \in Q_f} \left( r_{q,f} - p_{q,m_f} \right)}{|Q_f|}$$

beschrieben wird, wobei

**F** die Menge aller abgebildeten Merkmale,
$Q_f$ die Menge der Qualitätsmerkmale, die für ein Merkmal **f** definiert ist,
$r_{q,f}$ der erforderliche, normalisierte Wert des Merkmals **f** für ein Qualitätsattribut **q**,
$p_{q,m_f}$ der normalisierte Wert des Qualitätsattributs **q**, welches $m_f$ bereitstellt, ist,

$m_f$ ein konkretes Cloud-Merkmal ist, welches mit dem Merkmal $f$ abgeglichen wurde,

und $f_{total}$ eine Gesamtzahl der Anwendungsfunktionen ist.

2. Verfahren nach dem vorhergehenden Anspruch, wobei die Konfiguration des zumindest einen Geräte-Merkmals (20) durch Bestimmung zumindest eines Geräte-Parameters zur Ansteuerung des technischen Geräts (101) festgelegt ist.

3. Verfahren nach einem der vorhergehenden Ansprüche, wobei der zweite Edge-Dienst (2) die Abstrahierung des Geräte-Modells mittels eines Verfahrens zur automatischen Klassifizierung von Merkmalen, welches auf dem Prinzip der künstlichen Intelligenz oder des maschinellen Lernens beruht, durchführt.

4. Verfahren nach einem der vorhergehenden Ansprüche, wobei der Auswahl-Parameter (14) eine Kenngröße hinsichtlich der Gesamtmerkmalserfüllung $FF$ umfasst, welche durch den Zusammenhang:

$$FF = \frac{f_{mapped}}{f_{total}}$$

beschrieben werden kann, wobei $f_{mapped}$ die Anzahl der Anwendungsfunktionen, für die eine Übereinstimmung gefunden wurde, und $f_{total}$ die Gesamtzahl der Anwendungsfunktionen ist.

5. Vorrichtung (100) zum Ansteuern eines technischen Geräts (101) mit einem optimalen Modell, wobei die Vorrichtung (100) dazu eingerichtet ist, die Schritte des Verfahrens nach einem der vorhergehenden Ansprüche auszuführen.

**Claims**

1. Computer-implemented method for controlling a technical device (101) with an optimal model, wherein the following steps are carried out:

   a) configure (100) at least one device feature (20) of the technical device in the form of a device model by way of a first edge service (1),
   b) generate (110) at least one abstracted feature (21) in the form of an abstract model by way of a second edge service (2),
   c) generate (120) and configure a first relationship (10) between the first edge service (1) and the second edge service (2), which is determined by means of an automatic classification of the at least one device feature (20) using the at least one abstracted feature (21),
   d) provide (130, 11-13) at least one respective application feature (22) in the form of an application model from at least one IoT service provider (3-5) by way of the second edge service (2) using a selection parameter (14) on the basis of the abstract model,
   e) compare (140) the abstracted model with the application model and select the model with the greatest match as the optimal model,
   f) control (150) the technical device (101) with the optimal model,

   wherein the selection parameter (14) comprises a variable regarding the quality adherence $QAD,$ which is described by the relationship:

$$QAD = 0.5 \, \frac{1}{ftotal} \sum_{f \epsilon F} 1 - \frac{\Sigma_{q \epsilon Q_f}(r_{q,f} - p_{q,m_f})}{|Qf|}$$

   wherein

   $F$ is the amount of all mapped features,
   $Q_f$ is the amount of quality features which are defined for a feature $f,$

$r_{q,f}$ is the required, normalised value of the feature **f** for a quality attribute **q,**

$p_{q,m_f}$ is the normalised value of the quality attribute q, which $m_f$ provides,

$m_f$ is a concrete cloud feature, which was adjusted to the feature **f,**

and f_total is a total number of the application functions.

**2.** Method according to the preceding claim, wherein the configuration of the at least one device feature (20) is defined by determination of at least one device parameter for controlling the technical device (101).

**3.** Method according to one of the preceding claims, wherein the second edge service (2) carries out the abstraction of the device model by means of a method for automatically classifying features, which is based on the principle of artificial intelligence or machine learning.

**4.** Method according to one of the preceding claims, wherein the selection parameter (14) comprises a variable regarding the total feature fulfilment **FF,** which can be described in connection with:

$$FF = \frac{f_{mapped}}{f_{total}}$$

wherein $f_{mapped}$ is the number of application functions for which a match has been found and $f_{total}$ is the total number of application functions.

**5.** Method (100) for controlling a technical device (101) with an optimal model, wherein the apparatus (100) is configured to carry out the steps of the method according to one of the preceding claims.

**Revendications**

**1.** Procédé mis en œuvre par ordinateur destiné à la commande d'un appareil technique (101) avec un modèle optimal, dans lequel les étapes suivantes sont réalisées :

a) configuration (100) d'au moins une caractéristique d'appareil (20) de l'appareil technique sous la forme d'un modèle d'appareil par le biais d'un premier service de pointe (1),

b) génération (110) d'au moins une caractéristique virtuelle (21) sous la forme d'un modèle abstrait par le biais d'un second service de pointe (2),

c) génération (120) et configuration d'une première relation (10) entre le premier service de pointe (1) et le second service de pointe (2), qui est déterminée au moyen d'une classification automatique de l'au moins une caractéristique d'appareil (20) à l'aide de l'au moins une caractéristique virtuelle (21),

d) mise à disposition (130, 11-13) d'au moins une caractéristique d'application respective (22) sous la forme d'un modèle d'application d'au moins un fournisseur de services IoT (3-5) par le biais du second service de pointe (2) à l'aide d'un paramètre de sélection (14) sur la base du modèle abstrait,

e) comparaison (140) du modèle extrait avec le modèle d'application et sélection du modèle avec la plus grande correspondance en tant que modèle optimal,

f) commande (150) de l'appareil technique (101) avec le modèle optimal,

dans lequel le paramètre de sélection (14) comprend une grandeur caractéristique en ce qui concerne l'adhérence de qualité **QAD** qui est décrite par le biais du rapport :

$$QAD = 0.5 \cdot \frac{1}{f_{total}} \cdot \sum_{f \in F} 1 - \frac{\sum_{q \in Q_f} \left( r_{q,f} - p_{q,m_f} \right)}{|Q_f|}$$

dans lequel

**F** est la quantité de toutes les caractéristiques illustrées,

$Q_f$ est la quantité des caractéristiques de qualité qui est définie pour une caractéristique **f**,
**rq,f** est la valeur normalisée nécessaire de la caractéristique **f** pour un attribut de qualité **q**,
**pq,$m_f$** est la valeur normalisée de l'attribut de qualité **q**, qui met à disposition $m_f$,
$m_f$ est une caractéristique de nuage concrète qui a été ajustée avec la caractéristique **f**,

et $f_{total}$ est un nombre total des fonctions d'application.

**2.** Procédé selon la revendication précédente, dans lequel la configuration de l'au moins une caractéristique d'appareil (20) est définie par le biais de la détermination d'au moins un paramètre d'appareil destiné à la commande de l'appareil technique (101).

**3.** Procédé selon l'une quelconque des revendications précédentes, dans lequel le second service de pointe (2) exécute la virtualisation du modèle d'appareil au moyen d'un procédé destiné à la classification automatique de caractéristiques, qui repose sur le principe de l'intelligence artificielle ou de l'apprentissage machine.

**4.** Procédé selon l'une quelconque des revendications précédentes, dans lequel le paramètre de sélection (14) comprend une grandeur caractéristique en ce qui concerne l'accomplissement de caractéristique globale **FF** qui peut être décrit par le biais du rapport :

$$FF = \frac{f_{mapped}}{f_{total}}$$

dans lequel $f_{mapped}$ est le nombre des fonctions d'application pour lesquelles une concordance a été trouvée, et $f_{total}$ est le nombre total des fonctions d'application.

**5.** Dispositif (100) destiné à la commande d'un appareil technique (101) avec un modèle optimal, dans lequel le dispositif (100) est conçu pour réaliser les étapes du procédé selon l'une quelconque des revendications précédentes.

## FIG 1

## FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015081063 A1

- US 2018316555 A1

**In der Beschreibung aufgeführte Nicht-Patentliteratur**

- **DAVID BENAVIDES ; SERGIO SEGURA ; ANTO-NIO RUIZ-CORTES.** Automated analysis of feature models 20 years later: A literature review. *Information Systems,* 2010, vol. 35 (6), 615-636